Europäisches Patentamt

(19) European Patent Office

Office européen des brevets

(11) Veröffentlichungsnummer : **0 198 367**
**B1**

(12) # EUROPÄISCHE PATENTSCHRIFT

(45) Veröffentlichungstag der Patentschrift :
**03.01.90**

(51) Int. Cl.⁵ : **G 01 N 30/94**, G 01 N 30/90, B 01 D 15/08

(21) Anmeldenummer : **86104665.4**

(22) Anmeldetag : **05.04.86**

(54) **Planar-Zentrifugal-Chromatographieeinrichtung.**

(30) Priorität : 15.04.85 CH 1588/85
15.04.85 CH 1589/85

(43) Veröffentlichungstag der Anmeldung :
22.10.86 Patentblatt 86/43

(45) Bekanntmachung des Hinweises auf die Patenterteilung : 03.01.90 Patentblatt 90/01

(84) Benannte Vertragsstaaten :
CH DE FR GB LI

(56) Entgegenhaltungen :
WO—A—85 /045 94
DE—A— 1 951 064
GB—A— 1 262 493
US—A— 2 986 280
US—A— 4 077 886
US—A— 4 139 458
JOURNAL OF HIGH RESOLUTION CHROMATOGRAPHY & CHROMATOGRAPHY COMMUNICATONS, Band 8, Nr. 2, Februar 1985, Seiten 73-76, Heidelberg; SZ. NYIREDY et al.: "Sequential centrifugal layer chromatography (SCLC): a new technique for the isolation of natural compounds"

(73) Patentinhaber : Petazon AG
Baarerstrasse 59
CH-6300 Zug (CH)

(72) Erfinder : Nyiredy, Szaboics
Clausiusstrasse 25
CH-8092 Zürich (CH)
Erfinder : Mèszàros, Sàndor
Fogarasi ut 74b
Budapest (HU)
Erfinder : Sticher, Otto
Clausiusstrasse 25
CH-8092 Zürich (CH)
Erfinder : Nyiredy-Mikita, Klàra
Moszkva ter 8
H-1024 Budapest (HU)
Erfinder : Verzàr-Petri, Gisella
Jozsef krt. 44
H-1086 Budapest (HU)
Erfinder : Meier, Beat
Harossenstrasse 2/a
CH-8311 Brütten (CH)
Erfinder : Tyihàk, Ernö
Zapor u 59
H-1032 Budapest (HU)
Erfinder : Dallenbach-Tölke, Karin
Weinmanngasse 84
CH-8700 Küssnacht (CH)

(74) Vertreter : Hunziker, Jean
Patentanwaltsbureau Jean Hunziker Schulhausstrasse 12
CH-8002 Zürich (CH)

**Beschreibung**

Die Erfindung betrifft eine Planar-Zentrifugal-Chromatographie-Einrichtung, bestehend aus einer Kammer mit einem darin als chromatographisches Trennelement ausgebildeten, sich drehenden Rotor mit einer Tragplatte und darauf kreisförmig angeordnetem adsorbierendem Medium sowie einer ganz nahe dem äusseren Rand des Rotors und innerhalb der Kammer angeordneten Auffangvorrichtung, die mit dem Rotor auf einer gemeinsamen Welle fest montiert ist, wobei jeder einzelne Innenpunkt der Auffangvorrichtung von der Rotationsachse weiter entfernt ist als der von der Rotationsachse meistentfernte Punkt des adsorbierenden Mediums des Rotors.

Eine solche Einrichtung ist aus der US-A-4 077 886 bekannt. Bei dieser Einrichtung wird pastenförmiges adsorbierendes Medium durch einen Einlass im Bereich der Drehwelle nach und nach in einen Raum eingefüllt, der durch zwei sich drehende, kreisförmige Scheiben nach oben und unten und durch einen peripheren Distanzring nach aussen abgeschlossen ist. Die verschiedenen beschriebenen Ausführungen des Rings verhindern einerseits den Austritt des adsorbierenden Mediums aus dem genannten Raum, wogegen anderseits das Lösungsmittel mit dem getrennten Stoff durch den Ring austreten kann. Bei einer beschriebenen Ausführungsform ist ein Unterbrecher in Form einer auf der oberen Scheibe befestigten weiteren Scheibe angeordnet, die einen nach unten abgebogenen Rand aufweist, der mit geringem Abstand peripher den genannten Ring und die untere Scheibe übergreift. Dieser Unterbrecher dient dazu, das aus dem Ring austretende Lösungsmittel mit dem getrennten Stoff zu verdichten und in einen darunter angeordneten Sammelkanal zu leiten.

Der wesentliche Nachteil der in dieser bekannten Einrichtung vorgesehenen Auffang- und Sammelvorrichtung besteht darin, dass durch die unmittelbar am Austritt aus den Ring erfolgende Verdichtung und Umlenkung der Austritt selber behindert wird, wodurch in vielen Fällen eine Rückmischung zwischen bereits getrennten Teilchen auftritt, die das Trennungsresultat erheblich verschlechtert.

Aus der US-A-4 139 458 ist weiter eine Planar-Zentrifugal-Chromatographie-Einrichtung bekannt, bei welcher ein als flache Scheibe ausgebildeter, aus Glas bestehender Rotor innerhalb einer zur Horizontalen geneigten Kammer angeordnet ist. Das adsorbierende Medium ist auf der Oberseite des Rotors angeordnet. Die innere Wand der Kammer, die gegen die Achse des Rotors in einem Winkel von weniger als 90° gegenüber der Oberseite des Rotors geneigt ist, bildet die Sammelvorrichtung. Das Lösungsmittel wird in der Nähe der Welle des Rotors auf die Oberfläche des adsorbierenden Mediums eingeführt, strömt unter der Wirkung der Zentrifugalkraft durch das adsorbierende Medium, wobei die chromatographische Trennung erfolgt, tritt dann mit dem getrennten Stoff zusammen am Rand der kreisförmigen Glasscheibe aus dem adsorbierenden Medium und gelangt unter der Wirkung der Zentrifugalkraft in die in der stehenden Kammer ausgebildete Sammelvorrichtung. Dort fliesst das Lösungsmittel unter der Wirkung der Gravitation zum untersten Punkt der schräg stehenden Kammer und tritt durch eine Ausgangsbohrung aus der Vorrichtung aus.

Nachteilig bei dieser bekannten Einrichtung ist, dass das Lösungsmittel mit den in ihm vorhandenen getrennten Stoffen wegen der verhältnismässig grossen Entfernung und der schwachen Triebkraft der Gravitation nur langsam von den höheren Punkten der Kammer in die Ausgangsbohrung gelangt. Die Lösungsmittelteilchen, die in der Nähe dieser Ausgangsbohrung in den Sammelkanal gelangen, verlassen die Vorrichtung schneller. Auf diese Weise be steht auch hier die Gefahr der Rückmischung zwischen den bereits getrennten Teilchen, wodurch die im adsorbierenden Medium zustandegebrachte Trennung wesentlich verschlechtert wird.

Ein weiterer Nachteil der bekannten Vorrichtung ist, dass die infolge des sich im Dampfraum drehenden Rotors auftretende grosse Turbulenz die Ausbildung eines Dampfraumes von definierter Zusammensetzung nicht ermöglicht. Dies hat zur Folge, dass ein Teil des Lösungsmittels das adsorbierende Medium nicht durchströmt, sondern evaporiert und sich-ohne seine Aufgabe zu erfüllenentfernt. Dies verringert die Reproduzierbarkeit und die Wirksamkeit der Trennung. Wegen dieser Mängel kann mit der bekannten Vorrichtung keine analytische (nicht präparative) Chromatographie durchgeführt werden.

Ein weiterer Nachteil bei der Einrichtung gemäss der US-A-4 139 458 besteht darin, dass das adsorbierende Medium auf die den Rotor bildende oder darauf befestigte Glasplatte aufgeklebt ist. Es kann also nur ein klebbares adsorbierendes Medium angewendet werden.

Es wurden Versuche gemacht, diesen Nachteil zu beseitigen und zwar mit einer Scheibe, bei welcher das adsorbierende Medium zwischen zwei parallelen kreisförmigen Glasplatten angeordnet wird. (Siehe die Vorrichtung von Hitachi Corp.) Der Nachteil dieser Lösung ist, dass der auf den Radius senkrechte Querschnitt des adsorbierenden Mediums nicht konstant ist, d. h. die Massenkraft verändert sich mit der Entfernung vom Mittelpunkt, was eine Streifenverbreiterung ergibt.

Bei einer anderen bekannten Vorrichtung (WO-A-85 04 594 veröffentlicht am 24.10.85 Prioritätsdatum : 3.4.85) wird das Lösungsmittel auf den mittleren Teil eines drehbaren, mit der Horizontalen einen Winkel einschliessenden Rotors mit Hilfe einer zwischen dem Mittelpunkt und dem Rand des Rotors bewegbaren und einstellbaren Zuführvorrichtung aufgetragen. Nach Beendigung der chromatographischen Trennung wird das Lösungsmittel ebenfalls mit Hilfe einer ringförmigen ortsfesten Sammelvorrichtung entfernt. Auch bei dieser bekannten Vorrichtung besteht die Gefahr der Rückmischung, d. h. der

EP 0 198 367 B1

Wirkungsgrad der im adsorbierenden Medium zustandegebrachten Trennung wird auch durch diese Abführung wesentlich verringert.

Aufgabe der Erfindung ist es, eine Planar-Zentrifugal-Chromatographie-Einrichtung der eingangs genannten Art zu schaffen, welche das Abführen des Lösungsmittels schnell und ohne Gefahr einer Rückmischung gewährleistet.

Diese Aufgabe wird bei einer Planar-Zentrifugal-Chromatographie-Einrichtung gemäß der eingangs dargelegten Einrichtung nach der Erfindung dadurch gelöst, dass die Entfernung der einzelnen Innenpunkte der Auffangvorrichtung — von der Rotationsachse aus gemessen — verschieden ist, dass an jedem Punkt der Auffangvorrichtung, welcher ferner von der Rotationsachse ist als die zwei ihm benachbarten Punkte, eine Ausgangsöffnung angeordnet ist, welche mit einem axial verlaufenden Hohlteil der Welle des Rotors über einen Ableitungskanal verbunden ist, und dass die Einrichtung ein an das Hohlteil der Welle angeschlossenes, stehendes Abführungselement aufweist.

Vorteilhafterweise ist die Auffangvorrichtung als Sammelkanal ausgeführt, bei welchem sich die Entfernung der einzelnen Punkte des Sammelkanals von der Rotationsachse des Rotors symmetrisch zur genannten Achse ändert und an den meistentfernten Punkten des Sammelkanals je eine, d. h. mindestens zwei, vorteilhafterweise jeweils geradzahlige Ausgangsöffnungen, angeordnet ist bzw. sind.

Mit der erfindungsgemässen Planar-Zentrifugal-Chromatographie-Einrichtung kann das Lösungsmittel viel schneller aus der Einrichtung abgeführt werden, als bei den bekannten Vorrichtungen, da sich die Auffangvorrichtung mit dem Rotor zusammen dreht, wodurch beim Abführen des Lösungsmittels nicht die Gravitationskraft, sondern die Zentrifugalkraft ausgenützt wird, die um Grössenordnungen grösser ist, als die Gravitationskraft. Dabei wird das Lösungsmittel vom Trennelement aus radial nach aussen und gegen die Auffangvorrichtung mit dem Sammelkanal geschleudert, von wo es mittels Abführungselement über die Ausgangsöffnung, den Ableitungskanal und dem Hohlteil der Antriebswelle aus der Einrichtung zur Weiterverwendung entfernt wird. Die grosse Zentrifugalkraft ergibt zudem die Möglichkeit zur Anwendung von adsorbierenden Medien, deren Wirkungsgrad gross und deren Korndurchmesser klein ist. Aus der Tatsache, dass beim Abführen des Lösungsmittels die Zentrifugalkraft und nicht die Gravitationskraft ausgenützt wird, folgt noch der weitere Vorteil, dass der Rotor waagrecht angeordnet sein kann und nicht unbedingt schräg gestellt werden muss, was die Anordnung der Einrichtung vereinfacht.

Die Anwendung von mehreren Ausgangsöffnungen hat zur Folge, dass das Abführen des Lösungsmittels beschleunigt wird. Das schnelle Abführen verringert die Gefahr des Rückmischens, was die Verbesserung des Wirkungsgrades nach sich zieht.

Bei einer vorteilhaften Weiterbildung der Erfindung besteht der als chromatographisches Trennelement ausgebildete Rotor aus einer unteren Tragplatte, einer oberen Deckplatte und einem zwischen den beiden Platten angebrachten adsorbierenden Medium wobei zwischen Tragplatte und Deckplatte ein Spalt vorhanden ist, in welchem das adsorbierende Medium kreisförmig angeordnet ist, und wobei sich die Höhe des Spaltes gemäss der Gleichung

$$h = \frac{K}{a + b \cdot r + c \cdot r^2}$$

ändert, wobei r der Radius — gemessen von der Rotationsachse — und K, a, b und c vorbestimmbare Konstanten sind, und wobei schliesslich in der Nähe des Aussenumfanges des Spalts ein Abdeckfilter angeordnet ist. Hierbei ist es zweckmässig, wenn sich die Höhe des Spaltes gemäss $h = K/r$ ändert.

Ist der Querschnitt des Spaltes in Richtung des Radius', so wird das Erfordernis der Säulenchromatographie, namentlich, dass der Querschnitt des adsorbierenden Mediums auf die Strömungsrichtung des Lösungsmittels senkrecht streng konstant sein muss, erfüllt. Davon ergibt sich, dass die in der Säulenchromatographie vorkommenden Füllungen ohne Bindemittel angewendet werden können. Ein weiterer Vorteil dieser Lösung ist, dass die Auffüllung der Säule einfach und gut reproduzierbar ist.

Eine Ausbildung, bei welcher sich die Höhe des Spaltes gemäss der Gleichung $h = K/r^2$ ändert, d. h. bei welcher die Massenkraft entlang des Radius' von der Rotationsachse des Trennelementes ab gemessen konstant ist, ist deshalb vorteilhaft, weil dadurch die Strömungsgeschwindigkeit des Lösungsmittels konstant ist. Es ergibt sich die Möglichkeit, die vom Standpunkt der Trennung aus optimale Strömungsgeschwindigkeit einzustellen.

Bei einer anderen Ausführungsform ist das Trennelement um die Rotationsachse drehbar angeordnet und weist in einer der Platten zur Achse konzentrische ringförmige Kanäle zum Einführen des Lösungsmittels auf. Die dem adsorbierenden Medium zugewandten Enden der Kanäle sind mit einer Filterplatte abgedeckt. Diese Ausführungsform hat den Vorteil, dass das Lösungsmittel zwischen der Achse und dem Rand des Trennelementes an irgendeinem Punkt oder an irgendwelchen Punkten eingeführt werden kann, wodurch die Wirksamkeit der Trennung beeinflusst werden kann.

Im folgenden wird die Erfindung anhand der Zeichnungen näher erläutert. Es zeigen rein schematisch

Fig. 1 eine Seitenansicht der erfindungsgemässen Planar-Zentrifugal-Chromatographieeinrichtung teilweise im Schnitt,

3

Fig. 2 einen Schnitt nach der Linie II-II in Fig. 1,

Fig. 3 das erfindungsgemässe Trennelement in Seitenansicht, teilweise im Schnitt, in ungefülltem Zustand,

Fig. 4 dasselbe Trennelement in mit adsorbierendem Medium gefülltem Zustand, und

Fig. 5 eine weitere Ausführungsform des Trennelementes in Seitenansicht, teilweise im Schnitt, in welchem konzentrische ringförmige Kanäle angeordnet sind.

In verschiedenen Patentschriften und zahlreichen Veröffentlichungen ist der Grundaufbau einer Chromatographieeinrichtung bekannt geworden. Nachfolgend wird auf den Hauptteil einer solchen Einrichtung eingegangen.

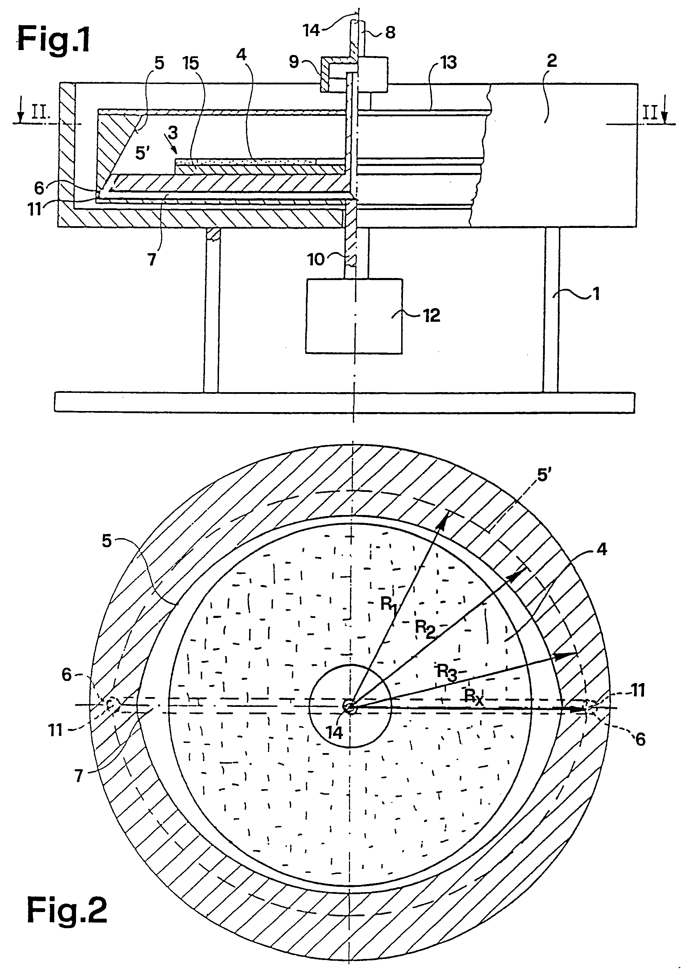

Die erfindungsgemässe Planar-Zentrifugal-Chromatographieeinrichtung gemäss den Fig. 1 und 2 besteht aus einer an sich bekannten Kammer 2, die auf einem Gestell 1 waagrecht angeordnet ist. In der Kammer 2 ist ein Rotor 3 angeordnet, der um eine Welle 10 mit Hilfe eines Motors 12 drehbar ist. Die Drehzahl des Motors 12 kann verändert werden und liegt zwischen 50 und 3'600 1/min.

Der Rotor 3 ist ebenfalls waagrecht angeordnet und enthält ein adsorbierendes Medium 4, welches sich mit dem Rotor 3 zusammen dreht. Der Rotor kann auf herkömmliche Weise ausgebildet sein ; dann wird das adsorbierende Medium 4 als Kreisring auf eine kreisförmige Glasscheibe als Tragplatte 15 aufgetragen. Es kann aber auch ein Rotor 3 angewendet werden, bei welchem das adsorbierende Medium 4 zwischen zwei Scheiben, d. h. zwischen einer Tragplatte und einer Deckplatte angebracht ist, wobei die eine Scheibe aus durchsichtigem Material ausgebildet sein kann.

Am äusseren Umfangsrand des Rotors 3 und innerhalb der Kammer 2 ist eine Auffangvorrichtung 5 angeordnet, die auf die Welle 10 montiert ist, so dass sie sich mit dem Rotor 3 und mit dem adsorbierenden Medium 4 zusammen dreht.

Jeder einzelne Punkt der Auffangvorrichtung 5 mit dem Sammelkanal 5' ist einerseits von der Rotationsachse 14 der Chromatographieeinrichtung weiter entfernt, $R_1$, $R_2$, $R_3$....., als der von der Rotationsachse 14 meistentfernte Punkt $R_x$ des adsorbierenden Mediums 4. Andererseits ist die Entfernung $R_1$, $R_2$, $R_3$ ..... der einzelnen Punkte der Auffangvorrichtung 5 von der Rotationsachse 14 gemessen verschieden. An jedem Punkt 11 der Auffangvorrichtung 5 bzw. dem Sammelkanal 5', welcher ferner ist, als die zwei ihm benachbarten Punkte, ist eine Ausgangsöffnung 6 ausgebildet. Diese Ausgangsöffnungen 6 und der Hohlteil der Welle 10 des Rotors 3 sind mit Ableitungskanälen 7 verbunden. An die Welle 10 ist ein stehendes Abführungselement 8, z. B. eine Saugpumpe mit Zwischenschaltung einer drehenden Dichtung 9, z. B. eines Simmeringringes, angeschlossen. Der Raum der Kammer mit dem Trennelement und der Auffangvorrichtung kann auch unter Vakuum stehen.

Im dargestellten Ausführungsbeispiel weist die Auffangvorrichtung 5 einen wie Fig. 2 zeigt im Grundriss ellipsenartig geformten Sammelkanal 5' auf, bei welchem sich also die Entfernung der einzelnen Punkte von der Rotationsachse 14 des Rotors 3 symmetrisch zur genannten Achse ändert. An den meistentfernten Punkten 11 des Sammelkanals 5' ist je eine Ausgangsöffnung 6 ausgebildet. Insgesamt sind somit mindestens zwei, vorzugsweise jeweils eine geradzahlige Anzahl zur Rotationsachse 14 symmetrische Ausgangsöffnungen 6 ausgebildet.

Vom Standpunkt der Erfindung aus betrachtet ist es nur wesentlich, dass an jedem Punkt des Sammelkanals 5' eine Ausgangsöffnung 6 vorhanden ist, welcher Punkt ferner ist, als die zwei ihm benachbarten Punkte der Auffangvorrichtung.

Oberhalb des adsorbierenden Mediums kann ein Deckel 13 angeordnet sein, welcher sich zusammen mit dem Rotor 3 dreht. Dieser Deckel 13 kann aus durchsichtigem, durchscheinendem oder opaken Material, z. B. aus Glas oder auch aus Metall oder Kunststoff bestehen. Bei der Wahl des Deckelmaterials ist das einzige Erfordernis, dass das Lösungsmittel oder dessen Dampf das Material nicht angreift. Der Deckel 13 schliesst an seinem Rand den oberhalb des adsorbierenden Mediums 4 vorhandenen Raum hermetisch ab und sichert dadurch die Stabilität des oberhalb des adsorbierenden Mediums vorhandenen Dampfraumes.

Die erfindungsgemässe Planar-Zentrifugal-Chromatographieeinrichtung gemäss den Fig. 1 und 2 arbeitet wie folgt :

Das zu trennende Gemisch wird auf den Mittelteil des sich drehenden Rotors 3 aufgebracht und durch eine mit Hilfe der Zentrifugalkraft zustandegebrachte Elution dadurch getrennt, dass das Gemisch das adsorbierende Medium 4 durchströmt.

Die getrennte Lösung fliesst unter der Wirkung der Zentrifugalkraft des rotierenden Teils, bestehend aus Tragplatte 15, Medium 4 und Auffangvorrichtung 5, in die an den meistentfernten Punkten 11 der Auffangvorrichtung 5 angeordneten Ausgangsöffnungen 6 und gelangt durch diese und durch die Ableitungskanäle 7 in die Welle 10. Auf die Welle 10 ist das stehende Abführungselement 8, z. B. eine Pumpe, eine Ueberdruck- oder Vacuumanordnung mit Hilfe einer Dichtung 9, z. B. Simmeringring, angeordnet, durch welche das Lösungsmittel abgeführt wird.

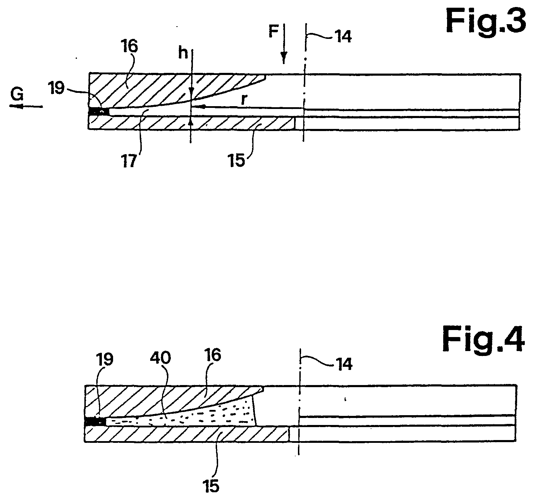

In Fig. 3 und 4 ist eine Variante eines Trennelementes dargestellt, welche in die beschriebene Einrichtung gemäss den Fig. 1 und 2, anstelle des Rotors 3, einsetzbar ist. Auf eine Welle mit Rotationsachse 14 ist eine untere Tragplatte 15 und eine obere Deckplatte 16 montiert. Zwischen den beiden Platten ist ein Spalt 17, in dem ein adsorbierendes Medium 40 kreisförmig angeordnet ist. Die Höhe h des Spaltes 17 ändert sich von der Rotationsachse 14 des Trennelementes aus in Richtung des Radius' r, gemäss der Gleichung

$$h = \frac{K}{a + b \cdot r + c \cdot r^2}$$

wo K, a, b und c konstant sind. Nahe des Aussenumfanges des Trennelementes ist ein ringförmiger Abdeckfilter 19 angeordnet, welcher den Spalt 17 nach aussen absperrt und das in den Spalt eingebrachte adsorbierende Medium 40 im Spalt hält, wobei der Abdeckfilter 19 das Lösungsmittel durchlässt.

Die Höhe h des zwischen der unteren Tragplatte 15 und der oberen Deckplatte 16 vorhandenen Spaltes kann sich in Richtung des Radius' r von der Achse 14 aus gemessen nach aussen, gemäss der Gleichung h = K/r ändern, falls a = c = 0 und b = 1 ist. In diesem Fall ist die auf die Richtung des Radius' senkrechte Querschnittfläche des ganzen Ringes r des Spaltes 17 konstant und nur vom Koeffizienten K abhängig.

Die Höhe h des zwischen der unteren Tragplatte 15 und der oberen Deckplatte 16 vorhandenen Spaltes 17 kann sich in Richtung des Radius' r von der Achse 14 aus gemessen nach aussen auch gemäss der Gleichung h = k/r² ändern, falls a = b = 0 und c = 1 ist. In diesem Fall ist die Massenkraft entlang des Radius' r konstant.

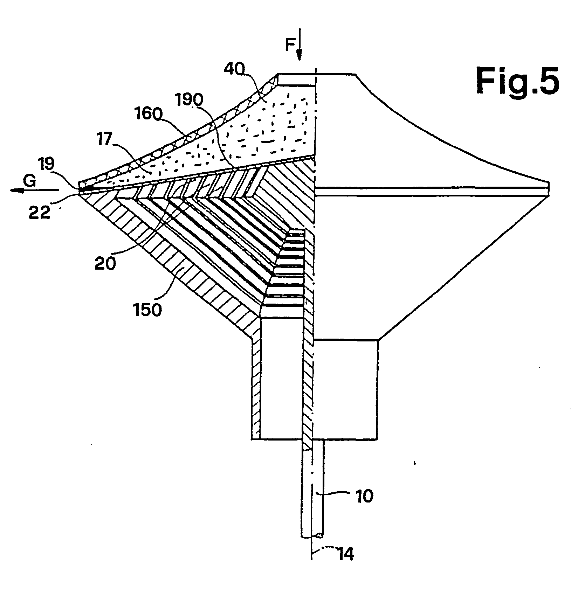

Fig. 5 zeigt eine weitere Variante eines Trennelementes, das um die Achse 14 drehbar ist, und bei welchem entweder in der Tragplatte 150 oder in der Deckplatte 160 zur Achse 14 konzentrische ringförmige Kanäle 20 angeordnet sind. Diese Kanäle 20 dienen dem Einführen des Lösungsmittels an verschiedenen Punkten.

Das adsorbierende Medium 40 ist im Spalt 17 zwischen Tragplatte 150 und Deckplatte 160 eingebracht. Die dem adsorbierenden Medium 40 zugewandten Enden der Kanäle 20 sind mit einer Filterplatte 190 abgedeckt, damit das adsorbierende Medium 40 nicht in die Kanäle 20 hineindringt.

Die anhand der Fig. 3 bis 5 beschriebenen Trennelemente werden auf folgende Weise angewendet:

Das Lösungsmittel wird in der Nähe der Achse 14 in Richtung des Pfeiles F eingeführt und strömt durch das adsorbierende Medium 4 in Richtung des Radius' r nach aussen. Inzwischen geht die chromatographische Trennung vor sich. Das Lösungsmittel verlässt das Trennelement in Richtung des Pfeiles G.

Das Lösungsmittel strömt durch das adsorbierende Medium 40 entweder unter Wirkung der Zentrifugalkraft, falls das Trennelement dadurch in Drehung gesetzt wird, dass die Welle 10 in bekannter Weise mit einem elektrischen Motor angetrieben wird, oder das Trennelement kann auch stehend verwendet werden ; dann wird das Lösungsmittel pneumatisch durch das adsorbierende Medium 40 getrieben. In diesem Fall kann das Durchströmen des adsorbierenden Mediums auch in umgekehrter Richtung stattfinden, d. h. das Lösungsmittel kann am Rand 22 des Trennelementes eingeführt und nahe der Achse 14 entfernt werden.

Falls ein Trennelement gemäss Fig. 5 angewendet wird, in welchem konzentrische ringförmige Kanäle 20 angeordnet sind, besteht die Möglichkeit, das Lösungsmittel zwischen der Achse 14 und dem Rand 22 des Trennelementes an irgendeinem Punkt oder an irgendwelchen Punkten einzuführen, wodurch die Wirksamkeit der Trennung beeinflusst werden kann.

## Patentansprüche

1. Planar-Zentrifugal-Chromatographie-Einrichtung, bestehend aus einer Kammer (2) mit einem darin als chromatographisches Trennelement ausgebildeten, sich drehenden Rotor (3) mit einer Tragplatte (15) und darauf kreisförmig angeordnetem adsorbierendem Medium (4) sowie einer ganz nahe dem äusseren Rand des Rotors und innerhalb der Kammer (2) angeordneten Auffangvorrichtung (5), die mit dem Rotor (3) auf einer gemeinsamen Welle (10) fest montiert ist, wobei jeder einzelne Innenpunkt der Auffangvorrichtung (5) von der Rotationsachse (14) weiter entfernt ist als der von der Rotationsachse meistentfernte Punkt des adsorbierenden Mediums (4) des Rotors, dadurch gekennzeichnet, dass die Entfernung ($R_1$, $R_2$, $R_3$ ...) der einzelnen Innenpunkte der Auffangvorrichtung (5) — von der Rotationsachse (14) aus gemessen — verschieden ist, dass an jedem Punkt der Auffangvorrichtung, welcher ferner von der Rotationsachse (14) ist als die zwei ihm benachbarten Punkte, eine Ausgangsöffnung (6) angeordnet ist, welche mit einem axial verlaufenden Hohlteil der Welle (10) des Rotors (3) über einen Ableitungskanal (7) verbunden ist, und dass die Einrichtung ein an das Hohlteil der Welle (10) angeschlossenes, stehendes Abführungselement (8) aufweist.

2. Planar-Zentrifugal-Chromatographie-Einrichtung nach Anspruch 1, dadurch gekennzeichnet, dass die Auffangvorrichtung (5) ein Sammelkanal ist, bei welchem sich die Entfernung der einzelnen Punkte des Sammelkanals von der Rotationsachse (14) des Rotors (3) symmetrisch zur genannten Achse (14) ändert und an den meistentfernten Punkten (11) des Sammelkanals (5) je eine, d. h. mindestens zwei, vorteilhafterweise jeweils geradzahlige Ausgangsöffnungen (6), angeordnet ist bzw. sind.

3. Planar-Zentrifugal-Chromatographie-Einrichtung nach Anspruch 1 oder 2, dadurch gekennzeichnet, dass oberhalb des adsorbierenden Mediums (4) ein sich mit diesem zusammen drehender Deckel (13) angeordnet ist, welcher am Rand hermetisch zur Auffangvorrichtung (5) befestigt ist.

4. Planar-Zentrifugal-Chromatographie-Einrichtung nach einem der Ansprüche 1 bis 3, dadurch gekennzeichnet, dass der als chromatographisches Trennelement ausgebildete Rotor aus einer unteren Tragplatte (15), einer oberen Deckplatte (16) und einem zwischen den beiden angebrachten adsorbierenden Medium (4) besteht, dass zwischen Tragplatte (15) und Deckplatte (16) ein Spalt (17) vorhanden ist, in welchem das adsorbierende Medium (40) kreisförmig angeordnet ist, und dass sich die Höhe (h) des Spaltes (17) gemäss der Gleichung

$$h = \frac{K}{a + b \cdot r + c \cdot r^2}$$

ändert, wobei r der Radius — gemessen von der Rotationsachse (14) — und K, a, b und c vorbestimmbare Konstanten sind, und dass in der Nähe des Aussenumfanges (18) des Spalts (17) ein Abdeckfilter (19) angeordnet ist.

5. Planar-Zentrifugal-Chromatographie-Einrichtung nach Anspruch 4, dadurch gekennzeichnet, dass sich die Höhe (h) des Spaltes (17) gemäss h = K/r ändert.

6. Planar-Zentrifugal-Chromatographie-Einrichtung nach Anspruch 4, dadurch gekennzeichnet, dass sich die Höhe (h) des Spaltes (17) gemäss der Gleichung h = K/r² ändert, d. h. die Massenkraft entlang des Radius' r von der Rotationsachse (14) des Trennelementes ab gemessen, konstant ist.

7. Planar-Zentrifugal-Chromatographie-Einrichtung nach einem der Ansprüche 4 bis 6, dadurch gekennzeichnet, dass das Trennelement um die Rotationsachse (14) drehbar angeordnet ist, und in einer der Platten (15 bzw. 16) zur Rotationsachse (14) konzentrische ringförmige Kanäle (20) zum Einführen des Lösungsmittels aufweist und die dem adsorbierenden Medium (40) zugewandten Enden dieser Kanäle (20) mit einer Filterplatte (21) abgedeckt sind.

**Claims**

1. Planar centrifugal chromatographic device comprising a chamber (2) embracing a rotating rotor (3) constructed to be a chromatographic separating member with a carrier plate (15) with adsorbing medium (4) circularly disposed thereupon and a collecting device (5) placed extremely close to the outer edge of the rotor and within chamber (2), which collecting device is rigidly mounted together with rotor (3) onto a common shaft (10) whereby each individual interior point of the collecting device (5) is further away from the axis of rotation (14) than the point furthest away from the axis of rotation of the adsorbing medium (4) of the rotor, characterised in that the distance ($R_1$, $R_2$, $R_3$ ...) of the individual interior points of the collecting device (5) — measured from the axis of rotation (14) — is different ; that an outlet opening (6) is positioned at each point of the collecting device which point is further away from the axis of rotation (14) than the two points adjacent to it, which outlet opening is connected with an axially disposed hollow section of shaft (10) of rotor (3) via a discharge channel (7) ; that the device includes a fixed discharge member (8) attached to the hollow member of shaft (10).

2. Planar centrifugal chromatographic device according to claim 1, characterised in that the collecting device (5) is a collecting channel wherein the distance of the individual points of the collecting channel from the axis of rotation (14) of rotor (3) changes symmetrically to said axis (14), and that at the furthest away points (11) of the collecting device (5) one each, i. e. at least two, advantageously an even number of outlet openings (6) is disposed.

3. Planar centrifugal chromatographic device according to claim 1 or 2, characterised in that above the adsorbing medium (4) a lid (13) is placed which rotates with said medium and which is mounted to be hermetically sealed at its edge with the collecting device (5).

4. Planar centrifugal chromatographic device according to one of the claims 1 to 3, characterised in that the rotor which is a chromatographic separating member comprises a lower carrier plate (15), a top cover plate (16) and adsorbing medium (4) disposed inbetween ; that a gap (17) is present between carrier plate (15) and cover plate (16) wherein the adsorbing medium (40) is circularly placed ; and that the height (h) of gap (17) changes according to the equation

$$h = \frac{K}{a + b \cdot r + c \cdot r^2}$$

wherein r is the radius — measured from the axis of rotation (14) — and K, a, b, and c are predeterminable constants ; that a covering filter (19) is disposed near the outer circumference (18) of gap (17).

5. Planar centrifugal chromatographic device according to claim 4, characterised in that the height (h) of gap (17) changes according to h = K/r.

6. Planar centrifugal chromatographic device according to claim 4, characterised in that the height (h) of gap (17) changes according to the equation h = K/r², i. e. the gravitational force along the radius r measured from the axis of rotation (14) of the separating member is constant.

7. Planar centrifugal chromatographic device according to one of the claims 4 to 6, characterised in that the separating member is disposed rotatingly around the axis of rotation (14) ; that one of the plates (15 or 16 respectively) has ringshaped channels (20) concentric to the axis of rotation to let in the solvent ; and that the ends of said channels (20) facing towards the adsorbing medium (40) are covered with a filter plate (21).

**Revendications**

1. Appareil de chromatographie plane centrifuge, constitué d'une chambre (2) contenant un élément séparateur chromatographique, sous la forme d'un rotor (3) rotatif avec une plaque-support (15) et une matière adsorbante (4) disposée circulairement sur cette plaque, ainsi qu'un dispositif capteur (5) disposé tout près du bord extérieur du rotor et à l'intérieur de la chambre (2), monté fixe avec le rotor (3) sur un arbre commun (10), chaque point intérieur du dispositif capteur (5) étant plus éloigné de l'axe de rotation (14) que le point de la matière adsorbante (4) du rotor le plus éloigné de l'axe de rotation, caractérisé en ce que la distance ($R_1$, $R_2$, $R_3$...) de chacun des points intérieurs du dispositif capteur (5) par rapport à l'axe de rotation (14) est différente, en ce que, en chaque point du dispositif capteur situé plus loin de l'axe de rotation (14) que les deux points qui sont ses voisins, est ménagée une ouverture de sortie (6) qui est reliée à une cavité axiale de l'arbre (10) du rotor (3) par un canal de dérivation (7), et en ce que l'appareil présente un élément d'évacuation (8) relié à la cavité de l'arbre (10).

2. Appareil de chromatographie plane centrifuge selon la revendication 1, caractérisé en ce que le dispositif capteur (5) est un canal collecteur dans lequel la distance entre chaque point du canal collecteur et l'axe de rotation (14) du rotor (3) varie symétriquement par rapport audit axe (14), et en ce que sur les points (11) du canal collecteur (5) les plus éloignés est disposée chaque fois une ouverture de sortie (6), c'est à dire au moins deux ouvertures, ces ouvertures étant avantageusement chaque fois en nombre pair.

3. Appareil de chromatographie plane centrifuge selon la revendication 1 ou 2, caractérisé en ce que sur la matière adsorbante (4) est disposé un couvercle (15) tournant avec cette matière et fixé hermétiquement sur son pourtour au dispositif capteur (5).

4. Appareil de chromatographie plane centrifuge selon l'une des revendications 1 à 3, caractérisé en ce que l'élément séparateur chromatographique, constitué sous la forme d'un rotor, se compose d'une plaque-support inférieure (15), d'une plaque de couverture supérieure (16) et d'une matière adsorbante (4) placée entre ces deux plaques, en ce qu'une fente (17) est ménagée entre la plaque-support (15) et la plaque de couverture (16), la matière adsorbante (4) étant disposée circulairement dans cette fente, et en ce que la hauteur (h) de la fente (17) varie selon l'équation :

$$h = \frac{K}{a + b \cdot r + c \cdot r^2}$$

dans laquelle r est le rayon, mesuré à partir de l'axe de rotation (14), et K, a, b et c sont des constantes pouvant être prédéterminées, et en ce qu'au voisinage du pourtour extérieur (18) de la fente (17) est disposé un filtre de retenue (19).

5. Appareil de chromatographie plane centrifuge selon la revendication 4, caractérisé en ce que la hauteur (h) de la fente (17) varie selon la formule $h = K/r$.

6. Appareil de chromatographie plane centrifuge selon la revendication 4, caractérisé en ce que la hauteur (h) de la fente (17) varie selon l'équation $h = K/r^2$, c'est à dire que la force massique le long du rayon r, mesurée à partir de l'axe de rotation (14) de l'élément séparateur, est constante.

7. Appareil de chromatographie plane centrifuge selon une des revendications 4 à 6, caractérisé en ce que l'élément séparateur est monté rotatif autour de l'axe de rotation (14) et présente dans une des plaques (15 ou 16) des canaux annulaires (20) concentriques à l'axe de rotation (14) pour l'introduction du solvant, les extrémités de ces canaux (20) proches de la matière adsorbante (40) étant recouvertes d'une plaque filtrante (21).

# Fig.1

# Fig.2

EP 0 198 367 B1

Fig.3

Fig.4

2

F

40

190

160

17

19

G

22

20

150

Fig.5

10

14